Europäisches Patentamt

European Patent Office

Office européen des brevets

(11) Publication number: **0 235 418**
**B1**

(12) **EUROPEAN PATENT SPECIFICATION**

(45) Date of publication of patent specification: **22.08.90**

(21) Application number: **86301477.5**

(22) Date of filing: **03.03.86**

(51) Int. Cl.⁵: **F 02 D 41/14, F 02 P 5/04, F 02 D 41/34, G 05 B 13/02**

(54) **System and method for maximising the performance of a power producing machine.**

(43) Date of publication of application:
**09.09.87 Bulletin 87/37**

(45) Publication of the grant of the patent:
**22.08.90 Bulletin 90/34**

(84) Designated Contracting States:
**CH DE FR GB IT LI SE**

(56) References cited:
**EP-A-0 044 656**
**EP-A-0 107 523**
**FR-A-2 467 986**
**US-A-4 130 863**
**US-A-4 448 171**
**US-A-4 450 817**
**US-A-4 479 476**
**US-A-4 575 800**

(73) Proprietor: **Optimizer Control Corporation c/o James W. Peter C.P.A. 4900 IDS Center Minneapolis Minnesota 55402 (US)**

(72) Inventor: **Kittelson, David B. 626 East Minnehaha Parkway Minneapolis, MN 55417 (US)**

(74) Representative: **MacGregor, Gordon et al ERIC POTTER & CLARKSON St. Mary's Court St. Mary's Gate Nottingham, NG1 1LE (GB)**

Courier Press, Leamington Spa, England.

## Description

This invention relates generally to an adaptive control system for improving the performance of power producing machines such as internal combustion engines, and more specifically to a closed-loop control system which remains stable over wide variations in engine speed settings.

In US—A—4026251, there is described a closed-loop digital electronic control system for an engine in which a machine controlling parameter is perturbated (dithered) about a given setting and the performance of the machine is monitored to determine whether movement of the machine controlling parameter about the given setting improved or degraded the system's performance. Where a given movement of the setting resulted in improved performance, the resulting control signal developed by the electronic circuits is used to create a further movement of the control setting in that same direction. However, if the small change introduced results in degraded performance, then the machine setting is moved in the opposite direction.

In the device of US—A—4026251, engine performance is monitored by accumulating "celsig" pulses during predetermined segments of the dithering cycle. "Celsig" pulses are produced by the rotating engine shaft, flywheel or alternator and their rate of occurance is proportional to engine speed. The control system logic utilizes a counting cycle which is divided into four quarters. Counting means are employed to count the number of "celsig" pulses in each quarter of the dither cycle. The counter is used to count up for the first quarter, down for the next two quarters and up again during the fourth quarter. The net number of counts remaining in the up/down counter at the end of each counting cycle is then used to determine whether to adjust the machine control parameter setting in one direction or the opposite direction. These corrections continue until no significant change in engine speed is produced by the dithering of the machine control parameter, indicating that the appropriate setting for maximum brake torque (MBT) has been located.

It has been found that the system works well provided that the number of "celsig" pulses is sufficiently large and that the dither period contains a large number of engine cycles, i.e., the engine rotational frequency is much larger than the dither frequency. However, if the engine frequency is not sufficiently larger than the dither frequency, loss of control may result.

It has been theorized that this loss of control is due to the fact that in the prior system, the dither pulses are asynchronous with respect to the engine cycle of the machine being controlled. That is to say, in the device of the aforereferenced patent, the dither frequency is a fixed parameter and determined strictly by the electronic oscillator used to penetrate it. As such, the change-over from "advance" to "retard" or vice versa at the initiation of or midway through the dither period is independent of the rotation of the engine shaft and of the firing pulses acting upon the pistons. As a result, and as will be set forth in greater detail hereinbelow, the normal variations in engine speed between cylinder-to-cylinder firings may at some times be reinforced by the speed changes occasioned by the dithering of the machine's control parameter setting and, at other times, be in phase opposition with the speed changes produced by the dithering.

In accordance with the present invention, the dither frequency is not fixed but, instead, is variable and synchronized with the machine's normal operating cycle. That is, each dither period begins with respect to a fixed shaft angle and each phase (advance and retard) of the dither period is comprised of an equal number of firing pulses. As such, the engine's cylinder firings do not continuously move in and out of phase with respect to the dithering of the machine control parameter. Computer simulations have revealed that this synchronous dithering technique significantly reduces the errror of the control system compared to the prior art system at all speeds and especially when the engine rotational frequency is of the same order or slightly smaller than the dither frequency.

In one embodiment of the invention, means are provided for sensing complete revolutions of the engine shaft, such as by providing a detectable mark on the engine's flywheel when a given engine cylinder is at top dead centre. A stationary detector may then be used to produce an impulse each time the mark moves past the detector. Further means are provided for measuring the time required for the shaft to traverse a predetermined number of revolutions or portions thereof. In one implementation, a very high frequency oscillator may be used to produce regularly occurring pulses at, for example, a 10 megahertz rate. These pulses are accumulated in a counter which is enabled by a first signal from the rotation detector and disabled by a later traversal of the detectable mark past the stationary detector. By dividing the dither period into four segments and then accumulating the high frequency clock pulses in a bank of four counters, the values stored at the end of the dither period directly relate to the average speed of rotation during those four segments. Logic means are then provided for comparing the average speed values during the first and fourth segments with those during the second and third segments and, based upon the algebraic sign of the difference of sums, a control signal is developed which, when applied to the transducer associated with the machine's control parameter setting, moves that setting by a predetermined amount in a direction calculated to improve the system's performance.

Alternatively, proportional control can be developed wherein the size of the correction step is directly related to the magnitude of the error signal rather than merely its polarity. The algorithm of the present invention may be implemented using discrete logic components as suggested above or, alternatively, may be achieved through proper programming of a microprocessor.

In US—A—4130863 mention is made of the fact that, in certain circumstances, it is desirable that the adaptive control system causes the machine to operate at a point displaced from MBT. The arrangement whereby off-optimum operation is attained is referred to as "biasing". Biasing is equally applicable in the present invention, irrespective of whether a discrete logic implementation or a microprocessor implementation is employed.

As has been already been indicated, in the control system constructed in accordance with the present invention, each phase of the dither period, i.e., the advance phase and the retard phase, are comprised of an equal number of engine cycles or power pulses and each such dither phase is synchronized to begin and end in a fixed phase relationship to such cycles or pulses. It has been found that improved control can be achieved where the number of such engine cycles or power pulses per dither phase can be selected as a function of engine rpm. Thus, for example, when the engine speed is in the range of from 0 rpm to 2,000 rpm, it is preferred that each phase of the dither cycle include two revolutions of the shaft (one complete engine cycle for a four-stroke cycle engine) whereas, when the engine speed is in the range of from 2,000—4,000 rpm, then each phase of the dither cycle should include four revolutions. This allows more clock pulses to be accumulated in each dither phase and thus leads to a more accurate determination of the error signal. Furthermore, it gives relatively more time for the engine to respond to timing changes which also leads to a larger, more easily measured error signal. Of course, other equal numbers of revolutions per dither cycle can be used at higher rpm values.

In applying the method and apparatus of the present invention to a diesel engine, certain calibration steps are required to compensate for differences in timing of the fuel injector devices themselves. Electronically actuated diesel fuel injectors and injection valves have associated with them mechanical or electrical delay times which can vary from unit to unit. Hence, if a fuel injection system with accurate timing control is desired, a suitable means must be provided for dealing with individual differences between injectors.

The method and apparatus of the present invention permits overall optimization of the timing of a diesel or spark ignition engine. Where, however, significant differences exist between the time lags associated with individual fuel injectors, and these differences are not taken into account, considerable cylinder-to-cylinder timing differences may result. This can cause high emissions and degraded fuel economy. The apparatus and method of the present invention can obviate this problem by allowing optimization of the timing of the individual cylinders whereby the relative phase lags between injectors can be determined. Knowing the individual timing differences, suitable control circuitry can be devised for compensating for variations in injector performance characteristics.

U.S. Patent No. 4,130,863 shows a control system for optimizing the performance of an internal combustion engine in which a given engine parameter is perturbated and in which the resulting effect on engine performance is computed for producing a control signal which is then used to adjust the setting in a way to improve engine performance and it is acknowledged that the features of the pre-characterised parts of Claims 1 and 4 are known in combination from this document.

U.S. Patent No. 4,479,476 shows a control system for optimising the performance of an engine in which the dithering period for adjusting a parameter of an internal combustion engine is set depending on the r.p.m. of the engine.

The present invention provides a method for calibrating the fuel injection timing of an internal combustion engine characterised as in Claim 1.

The present invention also includes an adaptive control system for maximising the performance of a power producing machine characterised as in Claim 4.

Reference is now made to the accompanying drawings, wherein:—

Figure 1 is a general block diagram of an adaptive control system in accordance with the present invention;

Figure 2 is a wave form showing the natural speed variations of a six cylinder internal combustion engine over one complete engine cycle;

Figure 3 is a set of wave forms illustrating a "dither" cycle and the resulting speed variations occasioned by the act of dithering assuming a six-cylinder engine and one engine cycle per dither phase.

Figure 4 is a logic diagram showing the way in which the present invention can be implemented using discrete logic elements;

Figure 5 is a block diagram of a microprocessor which may be programmed to carry out the control algorithm in accordance with this invention;

Figures 6(a) through 6(c) together depict a flow chart the manner in which the microprocessor of Figure 5 is programmed in accordance with the present invention;

Figures 7(a) and 7(b) are wave forms illustrating the variation in timing and timing error as a function of engine speed for the prior art asynchronously dithered electronic control system; and

Figures 8(a) through 8(f) are wave forms illustrating the variation of timing and timing error with speed changes obtained with the electronic control system of the present invention under different conditions of bias and clock rate.

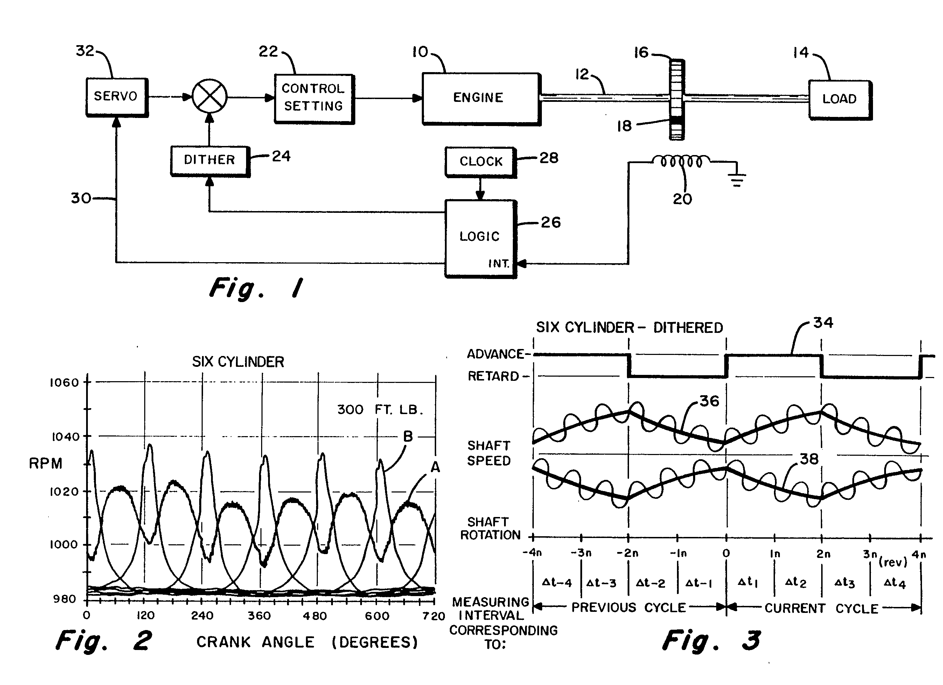

In Figure 1 there is illustrated, for exemplary purposes only, an internal combustion engine 10 having an output shaft 12 coupled to a load 14.

Affixed to the shaft is a flywheel 16. Located on the periphery of the flywheel 16 is a detectable mark such as a permanent magnet 18 which, as it rotates past the stationary detector 20, generates a voltage signal. One such pulse-type signal is produced for each revolution of the flywheel 16.

Also associated with the engine 10 is a control setting 22 which may take a variety of forms depending upon the nature of the machine being controlled. For example, in a gasoline burning engine, the control setting 22 may be the timing of the distributor whereas in a diesel fuel burning engine, the control setting 22 may relate to the injection timing mechanism of the engine.

The block 24 labelled "DITHER" is an electrical or electro-mechanical device which is effective to perturbate the control setting 22 so as to introduce a predetermined variation in the machine control setting from its nominal value. Whereas in US—A—4026251 (as well as US—A—3142967, US—A—4130863 and US—A—4306284) the period of the dither cycle is fixed in duration and has no particular relationship to the firing time of the individual engine cylinders, in the present invention, a digital logic device 26 under control of the rotation sensors 18—20 causes the control setting 22 to be moved back and forth in synchronism with the individual firing pulses developed in the engine 10. The time taken for the engine shaft 12 to move through a predetermined integral number of rotations during each phase of the dither period is measured by capturing regularly occurring high frequency clock pulses from a clock source 28 in suitable storage registers under control of the rotation sensors 18—20. Once a dither cycle is completed, a comparison is made between an estimate of what the average speed would be in the second and third quarters of the dither period if the timing were not dithered, i.e., left retarded, and the actual speed in these two quarters. The simplest estimate of this speed may be obtained by taking the average of the first and fourth quarter speeds. Such an estimate is sufficiently accurate for engine operation at steady speeds or during slow speed transients. During rapid speed transients, a more accurate estimate may be obtained by using values of first and fourth quarter speeds from previous dither cycles. Based on the comparison, the logic unit 26 develops an error signal on the line 30 which, acting through a servo mechanism 32, causes an adjustment of the control setting 22. The device 32 may be entirely electronic in nature or, alternatively, may be an electromechanical device.

Where it is desired to apply the optimization algorithm of the present invention to individual injectors rather than across all cylinders of a diesel engine, the engine is made to operate at a constant fueling rate and thus, at an approximately constant speed, preferably at a fast idle. Next, the timing of an individual injector is the control setting 22 to be dithered in synchronization with the crank shaft rotation. The timing of all remaining injectors would remain fixed. Again, once a dither cycle is completed, a comparison is made between the average speed of the output shaft in the second and third quarters of the dither period had the injection timing of the selected injector not been dithered and the actual speed in these two quarters. The logic unit 26 again develops an error signal which, acting through the servo mechanism 32, causes an adjustment of the selected injectors timing.

Referring next to Figure 2, there is shown, for purposes of illustration, a graph illustrating variations in engine speed (curve A) and cylinder pressure (curve B) through two revolutions (720 crank angle degrees) for a six cylinder engine. Thus, the graph of Figure 2 illustrates one complete engine cycle comprising the individual firing of the six cylinders. It can be noted that as the pressure in the cylinder rises (curve B) the shaft speed (curve A) decreases. Upon firing and the resulting reversal of the piston stroke, the pressure drops as the shaft speed increases. Then as the next piston in the firing order begins to move up within its cylinder to compress the air/fuel mixture in its cylinder, the pressure in the cylinder again climbs as the shaft speed decreases. It can be seen, then, that the speed curve (curve A) is somewhat sinusoidal but that there are speed variations between the various cylinder firings as reflected by the difference in height of the individual maxima of the speed curves.

Because of the natural variation in speed of the engine shaft, asynchronous dithering of the engine's control setting at times may result in the reinforcement of a speed increase or, alternatively, may detract from that speed increase. Similarly, a retard of the control setting may, at one time, result in a reduction in a speed increase or the reinforcement of a speed decrease. In fact, it was found through experimentation that the control system reflected in the aforereferenced patents would, at times, lose its ability to track and the error signal applied to the servo would wander in an uncontrollable fashion.

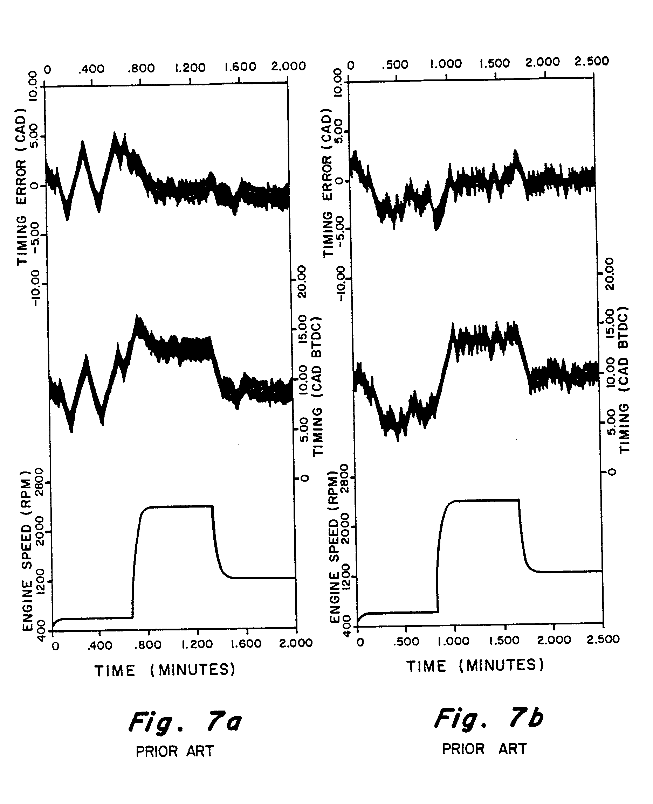

Figure 7(a) and 7(b) illustrate the variations in timing error measured in crank angle degrees (CAD) and variations in the timing itself as a result of shifts in engine speed with the adaptive electronic control system of the prior art in use. It is to be noted that at low RPM values there are extreme variations in timing and timing error with the control wandering back and forth about the zero error position. At higher RPM values, the timing error remains fairly constant but still exhibits fluctuations which cannot be attributed strictly to the fact that the control parameter is being dithered. Also, it may be noted that the timing and timing error undergo a significant transient variation upon acceleration and deceleration. The curve of Figure 7(a) has been plotted using a fixed dither frequency of 4 Hz. Figure 7(b) is a similar set of curves for the prior art control system when a 2 Hz dither frequency is involved. Again, the timing error is found to wander excessively at low engine RPM.

In accordance with the present invention, rather than dithering the machine control parameter at a fixed frequency, the dither period is synchronized to the normal engine's cycle. Thus, an integral number of firing pulses (curve B in Figure 2) occurred during each half cycle of the dither period and the beginning and ending of the dither cycle are made to occur in synchronism with the appropriate engine's cylinder firing.

Referring next to Figure 3, numeral 34 refers to the dither wave form. Assuming that the engine involved is a four-stroke engine, one complete cycle consists of two revolutions of the output shaft. The dither period is comprised of two phases, i.e., the advance phase and the retard phase. Each phase is made to contain an integral number of individual cylinder firing pulses and each phase is in synchronism with those firing pulses.

The wave forms 36 and 38 in Figure 3 illustrate the shaft speed during the advance and retard phases of the dither cycle 34. If the machine setting is retarded with respect to MBT, then, during the advance phase the shaft speed increases but during the retard phase the shaft speed decreases. This results in wave form 36 of Figure 3. On the other hand, if the machine control parameter setting is advanced with respect to MBT, further advancing of the setting during the first half of the dither cycle results in a speed decrease while retardation in the second phase of the dither cycle causes a speed increase. This characteristic is represented by the curve 38 in Figure 3.

As will be explained in greater detail, in implementing the control system of the present invention, it has been found expedient to divide the dither period into a plurality of segments. Specifically, and as is reflected in Figure 3, the dither period is divided into four such segments, each being a predetermined integral number of shaft rotations. The logic device 26 includes means for measuring the time required for the rotational intervals $\Delta t_1$, $\Delta t_2$, etc.

In carrying out the control function in its simplest form, the logic 26 determines whether the speed at the centre of the dither cycle is greater than or less than the speed at the edges of the dither cycle. More specifically, the time for the integral number of revolutions taking place during the first quarter and the last quarter of the dither period are summed together and from that sum is subtracted the sum of the average revolution times occurring during the second and third quarters of the dither cycle. If the resulting value is positive, it is known that advancing the machine control setting improves performance. However, if the difference in sums is negative, it is known that the dithering worsens performance and that the parameter setting should be retarded with respect to its then present setting. Leaving out for the moment the concept of biasing, this error equation may be expressed mathematically by the equation:

$$(1) \qquad E = (\Delta t_1 + \Delta t_4) - (\Delta t_2 + \Delta t_3)$$

Where $\Delta t_1$, $\Delta t_2 \ldots \Delta t_4$ are the average rotation times during the four quadrants of the dither period as indicated in Figure 3.

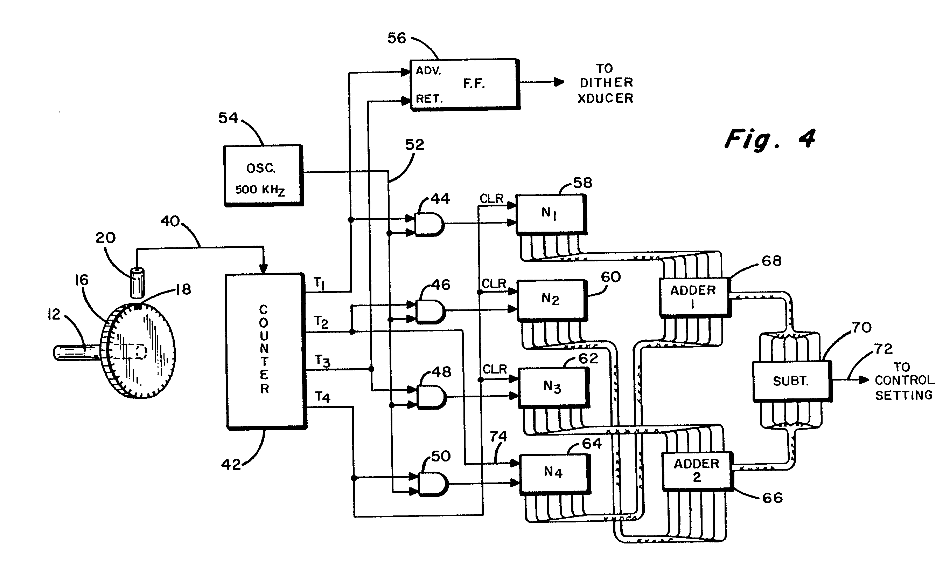

Whereas in the prior art adaptive control systems described in the aforereferenced Patents, shaft speed was measured by counting the number of so-called "celsig" pulses occurring during fixed portions of the dither cycle, in accordance with the present invention, since the dither cycle is synchronized with the rotation of the engine's shaft, average speed can be determined by counting the number of high-frequency clock pulses entered into a digital counter during predetermined numbers of revolutions of the output shaft. Replacing the "celsig" pulse generator of the prior art with a high frequency electronic oscillator or clock source should reduce the cost of the system as well as improve its performance. Referring to Figure 4, there is shown the manner in which the adaptive control system of the present invention can be implemented using discrete logic components. As is illustrated, the engine's shaft 12 drives a flywheel 16 having a magnetic element 18 disposed on the periphery thereof for cooperating with a pick-up coil 20. Thus, each revolution of the flywheel is accompanied by the generation of an electrical impulse on the conductor 40. While a magnet and magnetic pick-up combination has been found to yield satisfactory results, those skilled in the art will recognize that other means are available for producing an electrical signal when a fixed point on a rotating flywheel passes a predetermined stationary sensor. Hence, the invention is not to be construed as being limited to a magnetic pick-up.

The signals appearing on line 40 are applied to the count input terminals of a four-stage counter 42. The ouputs of the individual stages labelled $t_1$ through $t_4$ are individually coupled to first inputs of gating circuits 44, 46, 48 and 50. The second input to these aforementioned gates comes by way of conductor 52 from the output of a high frequency oscillator 54. The output from stages $t_1$ and $t_3$ are also connected through a leading edge triggered set/reset type flip-flop 56 whose output goes to a transducer (not shown) cooperating with the engine's control setting device 22.

Associated with each of the coincidence circuits 44 through 50 is a multi-stage binary counter as at 58, 60, 62 and 64. The outputs from counters 58 and 64 are applied in parallel to a first full adder circuit 68 while the parallel outputs from the counters 60 and 62 are applied as inputs to a second adder array 68. The outputs from the adder arrays 66 and 68 are then applied as inputs to a subtraction network 70 and, depending upon the results of the subtraction performed, the signal appearing on output line 72 is either positive or negative. This signal may be applied to a suitable electronic device for making a step-wise adjustment in the machine control parameter setting where the direction of the step is determined by the plurality of the output signal on line 72.

With reference to Figures 2, 3 and 4, an explanation will now be given as to the manner in which the implementation shown in Figure 4 may be used to control the operation of an internal combustion engine. The pickup device 20 is mounted on the frame in a cooperative relationship with the flywheel 16 or other component on the engine shaft rotating in synchronization with the engine such that on each successive revolution of the flywheel 16, an electrical pulse will be created on the line 40 in synchronism with the engine's firing cycle. It is assumed that the counter 42 is originally cleared and the leading edge of the pulse on line 40 will cause the counter to advance to its $t_1$ state. When in this condition, the flip-flop 56 will be switched to a state causing the dither device to advance the control setting of the engine relative to its then current position. At the same time, the $t_1$ output from the counter 42 enables the gate 44, allowing the high frequency clock pulses from the oscillator 54 to pass therethrough and be accumulated in the counter stage 58. At the completion of the first revolution of the flywheel 16, another impulse will be produced on the conductor 40 to advance the counter 42. That is to say, the counter 42 switches to its $t_2$ state. When in this condition, the gate 44 is disabled preventing any further clock pulses from being entered into the counter 58. Gate 46 will now be enabled, however, and the clock pulses from the oscillator 54 will pass therethrough and be accumulated in the counter 60. This continues until another complete revolution of the flywheel takes place when state $t_3$ of the counter 42 goes active. The setting of the counter 42 to its $t_3$ state performs two functions. First of all, a signal is presented to the reset terminal of the leading edge triggered flip-flop 56 and it reverts to its "retard" state, causing its output to ultimately cause a shift in the setting of the machine control parameter in a retard direction relative to its then nominal setting. Secondly, gates 44 and 46 are disabled while gate 48 is enabled to allow clock pulses from the oscillator 54 to be accumulated in the counter 62. Following one more revolution of the flywheel 16, the counter 42 is switched to its $t_4$ state, wherein all but gate 50 are disabled, and it is the counter 64 which then receives clock pulses from the oscillator 54 during one full revolution of the engine's output shaft.

With this arrangement shown in Figure 4, at the end of four revolutions of the flywheel 16, the counters 58 through 64 will contain values inversely proportional to the average speed of rotation of the output shaft during the four separate intervals indicated in the wave forms of Figure 3. While not specifically shown in the block logic diagram of Figure 4, temporary holding registers are also provided for storing the count values for subsequent arithmetic operations during the time that the counters 58 through 64 are cleared of their previous values in anticipation of the receipt of further timing pulses on subsequent rotations of the flywheel. Thus counters 58, 60 and 62 can be cleared immediately upon the initiation of the $t_4$ period of the counter 42 and, subsequently, on the initiation of the following $t_2$ period, a clear pulse may be applied over the line 74 to the counter 64 to clear it out in anticipation of the receipt of further timing pulses from the oscillator 54 on the then current computational cycle.

The values accumulated in the counters 58 through 64 during a first full dither cycle may then be summed in the adder networks 66 and 68 during the next succeeding dither cycle. In accordance with the error equation set forth above, the contents of counters 60 and 62 corresponding to the average time for rotations at the centre of the dither cycle are combined in adder 68 while the contents of the counters 58 and 64 corresponding to the average time for rotations of the shaft at the edges of the dither period are combined in adder 66. The subtractor 70 then operates on the sum representing signals developed in adders 66 and 68 and a determination is made as to whether the average time at the center of the dither cycle is greater than or less than that existing at its edges. This is reflected by the plurality of the signal appearing at the output 72 of the subtractor 70.

It is to be understood that the discrete logic implementation illustrated in Figure 4 is only one way of implementing a system for solving the speed equation and persons of ordinary skill in the art will be able to devise other logic arrangements for accomplishing the same end. Also, this implementation does not specifically treat biasing the error signal, but that can be accomplished, as well, using discrete logic. It is important to note, however, that the system of the present invention is different from the prior art in that the dither period is made to operate in synchronism with the rotation of the engine shaft and that average times for each revolution of the shaft is determined by accumulating regularly occurring outputs from a stable oscillator (oscillator 54) rather than "celsig" pulses generated by a transducer associated with the engine's output shaft. This permits a much higher degree of resolution of speed measurements than was obtainable using the prior art approaches as reflected in the aforereferenced patents.

Those skilled in the art will also recognize that much greater flexibility can be achieved by employing a programmed microprocessor as the logic element 26 of Figure 1 rather than the discrete digital logic implementation reflected by Figure 4. The way in which the present invention may be implemented and practiced using a programmed microprocessor will next be considered.

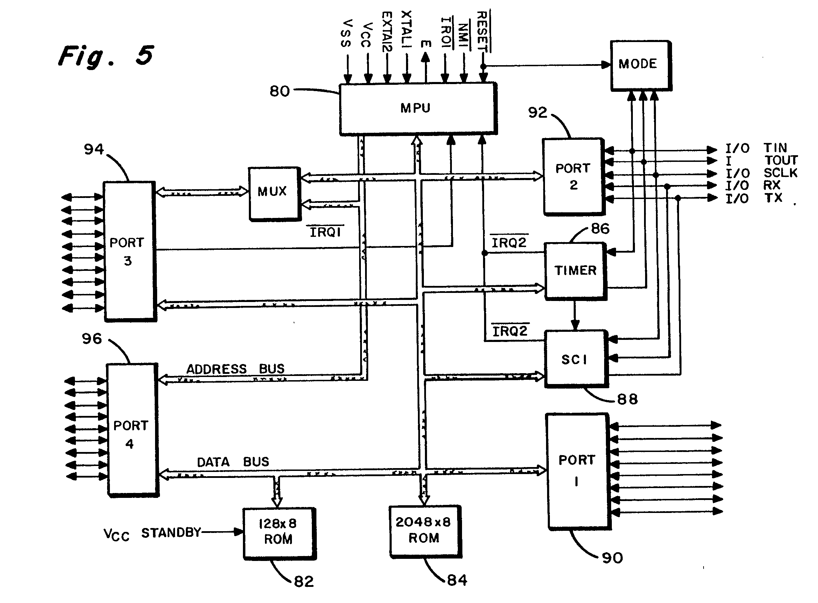

In Figure 5 there is shown by means of a general blocked diagram the architecture of the Motorola MC 6801 Microcomputer. It comprises a single-chip NMOS device in which the microprocessing unit 80 and its associated RAM 82 and ROM 84 are all disposed on the same silicon chip as are its own internal timer 86, its serial communications interface 88 and input/output ports 90, 92, 94 and 96. The MC 6801 Microcomputer System is able to operate in any one of three fundamental operating modes. More specifically, it can function as a single-chip device in which only on-chip resources are utilized and where the number of available input/output lines is maximized. Alternatively, it can be made to function in the so-called "expanded, non-multiplexed mode" in which external memory or other devices may be addressed for reading and writing via separate address and data buses. Finally, in the so-called "expanded multiplexed mode", the address and data buses are time-multiplexed, yielding a 64 K byte address space while requiring only a simple latch to de-multiplex the bus. In that the application to the present invention does not impose strenuous memory requirements, the device can be operated in the first or single-chip mode.

The programmable timer feature of the MC 6801 can advantageously be used in applying that microprocessor to the control system of the present invention. The timer 86 comprises a 16-bit, free-running counter which is incremented by a crystal control clock within the MPU 80. The counter can be read by the MPU and an overflow flag is set each time that the 16-bit counter contains all ones. Thus, it can be used to measure elapsed time between two events, e.g., successive pulses from the flywheel transducer.

Complete details concerning the architecture, features, programming and applications of the Motorola MC 6801 Microcomputer are set forth in a Motorola, Inc. publication entitled "MC 6801 8-Bit Single-Chip Microcomputer Reference Manual", copyright 1980, and those desiring more detailed information concerning its instruction repertoire, operating times, addressing formats and programming approaches are referred to that publication.

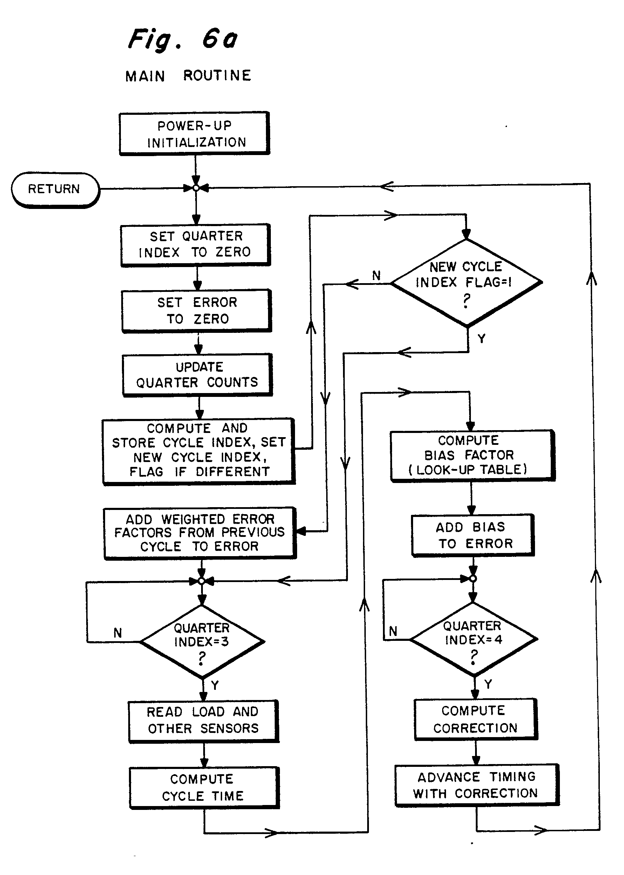

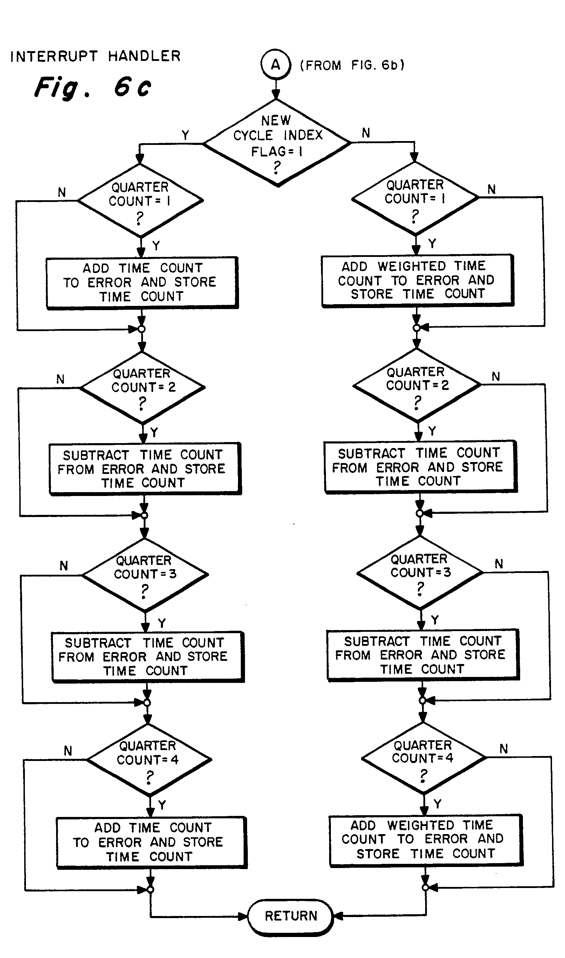

Figure 6(a) is a flow chart showing the manner in which the microprocessor may be programmed to compute the error signal in synchronization with the rotation of the engine shaft. The computer is programmed to calculate the error using the error equation:

$$E = \Delta t_{C\bar{D}} - \Delta t_{CD}$$

where $\Delta t_{C\bar{D}}$ is the time that would be required for the centre two quarters of the dither cycle if the timing were not dithered (advanced), and $\Delta t_{CD}$ is the measured time for the same two quarters in the presence of dithering, i.e., $\Delta t_2 + \Delta t_3$. The simplest version of the system, $\Delta t_{C\bar{D}}$, is taken as $\Delta t_1 + \Delta t_4$. This is adequate when the engine speed is constant or changing slowly. However, if the speed is changing rapidly, a more accurate estimate of $\Delta t_{C\bar{D}}$ can be obtained by using information from previous dither cycles. For example, if a fourth order polynomial is fit to the relationship between time and engine rotation using $\Delta t_{-4}$, $\Delta t_{-1}$, $\Delta t_1$ and $\Delta t_4$ (see Figure 3), a more accurate estimate of $\Delta t_{C\bar{D}}$ may be found and is given by:

$$\Delta t_{C\bar{D}} = A\Delta t_{-4} + B\Delta t_{-1} + C\Delta t_1 + D\Delta t_4$$

where A, B, C and D are constants determined by the fit. A bias term may be added to the error equation to cause the system to operate either somewhat advanced or retarded of MBT. Thus, the final error equation becomes:

$$E = A_4\Delta t_{-4} + B_4\Delta t_{-1} + C_4\Delta t_1 + D_4\Delta t_4 - \Delta t_2 - \Delta t_3 + \text{bias}$$

where the bias may be obtained from a look-up table. A bias value proportional to

$$(\Delta t_1 + \Delta t_2 = \Delta t_3 + \Delta t_4)^2$$

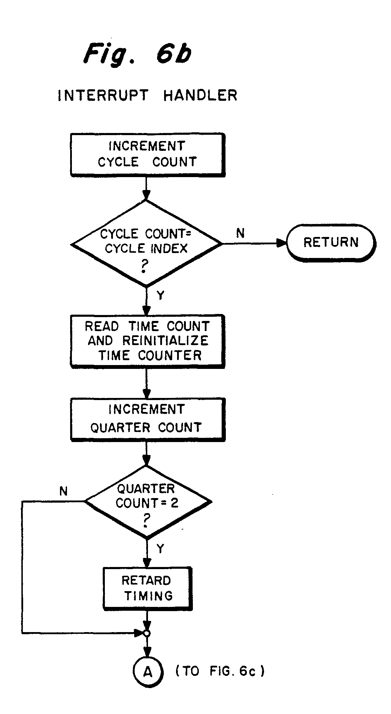

will produce an approximately constant degree of advance or retard from MBT. The microprocessor executes the instructions in the Main Routine depicted in Figure 6(a) until the rotation sensor 18—20 detects the passage of a reference mark past the stationary detector device. Upon each such event, the detector device generates an interrupt signal which is applied to the microprocessor input terminal $\overline{IRQ}$ 1 in Figure 5. This causes MPU 80 to execute a jump to a predetermined memory location to begin execution of the instructions comprising the Interrupt Handler depicted in the flow chart of Figure 6(b) and 6(c). As soon as the Interrupt Handler instructions have been executed, the machine automatically returns to the Main Routine.

Considering first the Main Routine shown in Figure 6(a), upon power-up of the microprocessor in anticipation of performing the adaptive control algorithm of the present invention, the so-called Quarter Counts as well as the Error values and Cycle Index values are initialised. The main program loop in the Main Routine begins with the setting of the Qaurter Index to zero. This Quarter Index value is incremented each time the interrupt routine is executed. Next, the Error value is also set to zero and then the Quarter counts from a previous cycle are interchanged with those for the current cycle such that the value for the new prior fourth quarter, $\Delta t_{-4}$, becomes equal to the value for the first quarter of the just-completed cycle, $\Delta t_1$. The remaining Quarter Counts are updated in a similar manner. In mathematical notation, then, this updating may be expressed as follows:

| New cycle | | Just completed cycle |
|---|---|---|
| $\Delta t_{-4}$ | = | $\Delta t_1$ |
| $\Delta t_{-3}$ | = | $\Delta t_2$ |
| $\Delta t_{-2}$ | = | $\Delta t_3$ |
| | and | |
| $\Delta t_{-1}$ | = | $\Delta t_4$ |

where $\Delta t_1$ is the time required for the shaft to rotate through a predetermined number of complete revolutions and 1 is the quarter number counted from the beginning of the newly initiated cycle as indicated in Figure 3.

Following this interchange operation, the next operation in the flow chart is the computation of the Cycle Index and the setting of the new Cycle Index flag if the new value of the Cycle Index is different from its prior value. The Cycle Index itself is calculated from the following set of equations:

$$\text{If } \frac{\Delta t_{-1}}{n} > T_1, \text{ then } n=1$$

$$\text{If } T_1 > \frac{t_{-1}}{n} > T_2, \text{ then } n=2$$

$$\text{If } \frac{\Delta t_{-1}}{n} < T_2, \text{ then } n=4$$

where $T_1$ and $T_2$ are the reciprocals of the rotational speeds at which n is incremented and n is the Cycle Index. It is to be understood that the use of the Cycle Index and its updating is optional to reduce the modulus of the counters employed and that it may be possible to use a constant Cycle Index. The next step is to decide if the curve fit method may be used to calculate the error. If the Cycle Index is the same as in the previous cycle, the new Cycle Index flag is set to zero and $\Delta t_{-4}$ and $\Delta t_{-1}$ may be used to start the error calculation. Then, the next step in the main program loop is to add the weighted error factors from the previous cycle

$$A\Delta t_{-4} + B\Delta t_{-1}$$

to the accumulated error. If the new Cycle Index flag is set to 1 the last step is bypassed.

Next, the Main Routine waits until the Quarter Index becomes equal to three. When this happens, a data input operation is conducted whereby digital values indicative of load as well as digital values from any other sensors employed are inputted. For example, on a spark ignition engine, a knock sensor can be used to call for a retard bias sufficient to reduce the knock to an acceptable level. This operation is followed by a computation of cycle time which is simply expressed as:

$$\Delta t = 2\left(\frac{\Delta t_2 + \Delta t_3}{n}\right)$$

where n is the Cycle Index. The total cycle time is then referred to as $\Delta t$.

Once the cycle time has been computed, the bias factor is next computed. This may conveniently be accomplished through the use of a look-up table stored in the ROM Memory 84 (Figure 5). That is to say, an engine load value, or cycle time, as well as possibly other factors obtained from suitable sensors, may be included in addressing a look-up table and a value is then extracted from the table and, when multiplied by the square of the cycle time, becomes the bias value which is added to the error, assuming that a bias correction is desired.

Now, no further computation takes place until the Quarter Index reaches four, at which point the correction is computed. The correction value may be proportional to the error or, alternatively, may merely be a positive or a negative correction of a fixed magnitude, depending upon whether the error is more positive than a small positive value for positive correction or more negative than a small negative value for a negative correction. The microprocessor then outputs a control signal to advance the engine parameter setting with the computed correction factor added in, and the operation loops back to its beginning where the Quarter Index is again set to zero and the error is set to zero, etc. Thus, when the timing is advanced, the dither amplitude plus the correction value is added to the previous value of the parameter setting.

Now that the Main Routine has been explained, consideration will be given to the Interrupt Handler. In this regard, reference is made to Figures 6(b) and 6(c) of the drawings. As has already been mentioned, the Interrupt Handler or routine is executed each time there is one complete revolution of the engine shaft as signalled by the creation of an interrupt by the mark detector 18—20 (Figure 1). The first operation performed as a part of the Interrupt Handler is to increment the cycle count. Next, a test is made to determine whether the cycle count has become equal to the Cycle Index value. If not, the Interrupt Handler merely returns to the Main Routine. However, if the cycle count has become equal to the Cycle Index value, then the Interrupt Handler reads the time count from the interval counter of the computer and, at the same time, does the reinitialization of the counter, readying it for the receipt of subsequent high frequency clock pulses. This is followed by the incrementing of the Quarter Count. Following the incrementing of the Quarter Count, a test is made to determine whether the new count value is equal to two. If it is, it means that one-half of the dither period is completed and that the parameter setting should now be retarded as a part of the normal dithering cycle. The timing is actually retarded by subtracting the dither amplitude from the current value of the time defined by the machine parameter control setting.

Following the midway shift in the dither signal from advance to retard, one of two possible computations is executed for updating the error value. Specifically, if the current Cycle Index is new or different from its previous value, then operation proceeds down the left-hand branch in the flow chart. First, a test is made to determine whether the Quarter Count is equal to one. If so, the time count is added to the accumulated error value with the time count being stored as the current value of $\Delta t_1$. If the Quarter Count is not equal to one, a further test is made to determine whether it is equal to two. If it is equal to two, then the time count is subtracted from the error and the time count value is stored away as $\Delta t_2$. If the Quarter Count is not equal to one or two, a test is made to see if it is equal to three and, if so, the time count value is subtracted from the error and that same time count value is stored away as $\Delta t_3$. Finally, if the Quarter Count is equal to four, then the time count is added to the accumulated error and this time count value is saved as $\Delta t_4$.

It was initially assumed that the Cycle Index was a new value. If, on the other hand, the Cycle Index is the same as the previous Cycle Index value, then operation proceeds down the right-hand branch of the flow chart and the error is calculated in a slightly different fashion. Specifically, if the Quarter Count is tested and found to be equal to one, then a weighted time count is added to the accumulated error. The weighted count is equal to a constant factor C multiplied by the current time count $\Delta t_1$.

If the Quarter Count is equal to two, the error is updated by subtracting the current time count from the accumulated error with the time count being saved as $\Delta t_2$. If the Quarter Count had been equal to three, then the error is updated by subtracting the time count from the accumulated error and the time count value is again stored away for later reference as $\Delta t_3$.

Lastly, if the Quarter Count is equal to four, a weighted time count is added to the accumulated error value with the weighted time count being of the form of D. $\Delta t_4$ and that time count is saved for later used in program execution. Irrespective of whether the left-hand branch or right-hand branch of the Interrupt Handler is followed, at the completion of the Quarter Count equal four test and the resulting operation, the program returns to the Main Routine.

The flow charts of Figure 6 illustrate only one way in which the present invention may be implemented by appropriately programming a general purpose microprocessor. Those skilled in the art having the foregoing flow charts before them will be in a position to write an assembler code for the microprocessor to generate the detailed machine code. Hence, it is deemed unnecessary to set forth the instruction listings themselves.

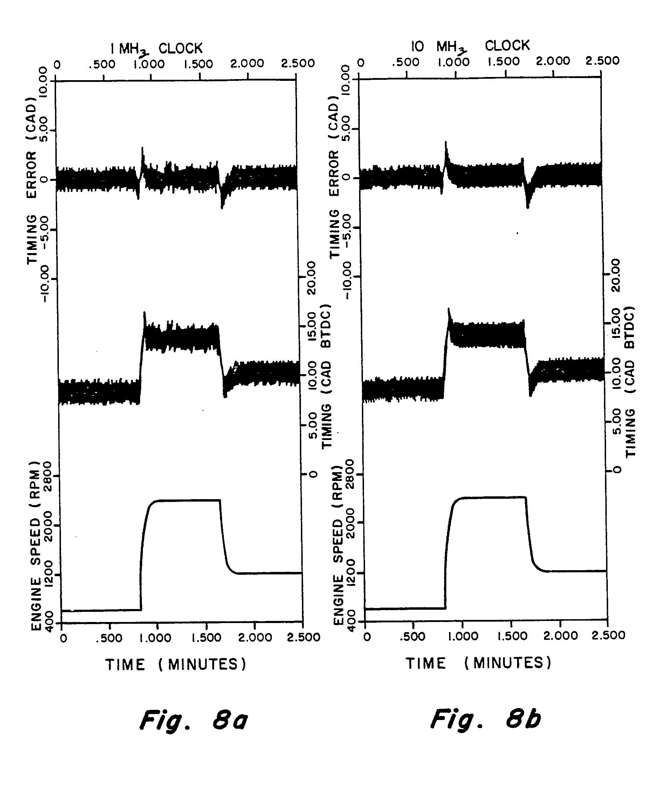

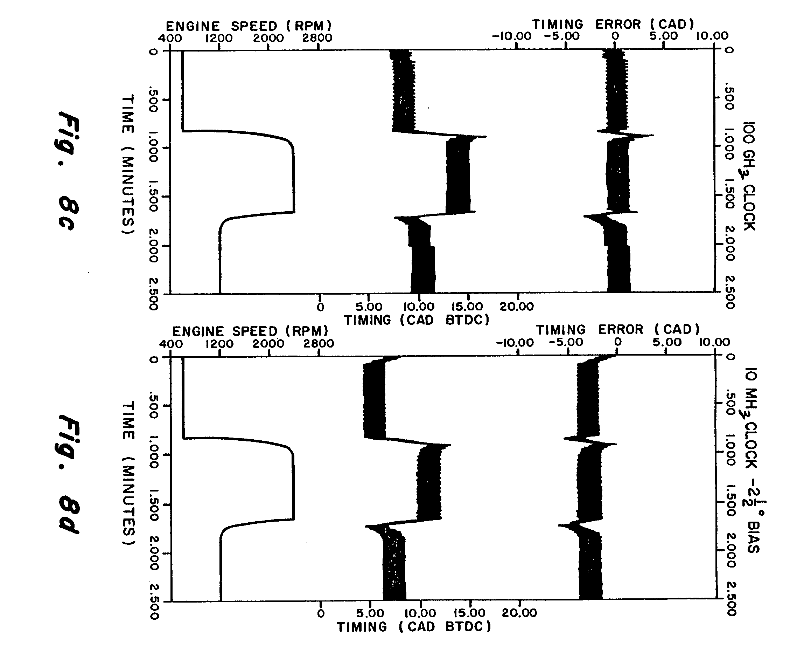

Figures 8(a) through 8(f) illustrate the results of a computer simulation of the control system of the present invention as applied to the injection timing of a diesel engine. In each instance, a plot has been obtained of the variations in timing error and in absolute timing for changes in engine speed as reflected by the lowermost curve in each of the figures. When these curves are compared to those of Figure 7 which, as mentioned, pertain to the prior art, it is immediately noted that the wandering of the control at low RPM is substantially eliminated. Similarly, there is much less variation in both absolute timing and in timing error when the synchronous dithering approach of the present invention is employed. In both systems, however, sudden changes in speed result in the introduction of a transient but, when comparing the curves of Figures 8(a) through 8(f) with those of Figures 7(a) and 7(b), it is immediately apparent that the transient dies out much more rapidly when the system of the present invention is employed as the control mechanism.

The effects of variations in the frequency of the clock used to define the shaft speed in the four quadrants of the dither cycle can be observed by comparing Figure 8(a) with Figure 8(b). The curves represented in Figure 8(a) were obtained when a 1 MHz clock source was used to supply pulses to a counter during the four segments of the dither period. In Figure 8(b), however, a 10 MHz clock source was employed. It is apparent from this comparison that the higher clock rate serves to decrease the variations in timing error over and above the error which is attributable to the dithering of the control parameter itself. The effect of clock rate is even more apparent in the curves of Figure 8(c) where the computer simulation was made to simulate the effects of increasing the clock oscillator frequency to 100 GHZ.

Figure 8(d) shows the effect of bias on the timing. Rather than being centered about the 10° advance position the timing is shifted by approximately 2.5° toward TDC. Similarly, the timing error is not long centered about the zero value but, instead, is displaced approximately 2.5 crank angle degrees negative. The curves of Figure 8(d) were obtained using a 10 MHz clock frequency.

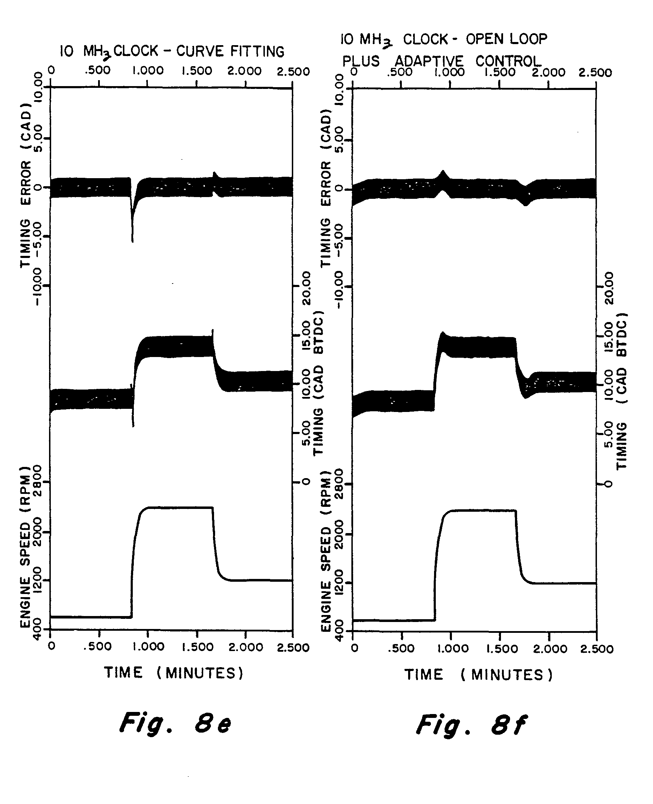

The plots of Figure 8(e) were obtained using a 10 MHz clock rate and proportional control wherein a curve fitting approach is utilized. Except for the transient errors resulting from rapid acceleration and deceleration, the timing error variations are all but eliminated as evidenced by the lack of variation in height of the timing error plot (except at the points of acceleration and deceleration).

Finally, the curves of Figure 8(f) were taken with the assumption that the adaptive control system of the present invention is used in conjunction with an open-loop controller of a type commonly found on internal combustion engines. With a dither amplitude of approximately 0.025 CAD and with a 10 MHz clock frequency, the combined control was such that the timing error was limited to that introduced by the dithering itself and that the system served to hold control at the desired zero error state over the full range of speed variations.

The manner in which timing characteristics of individual injectors in a multicylindered diesel may be determined by using the optimization technique of the present invention will now be described. First, the fuel injection control system is set to operate the engine at a constant fueling rate. Next, the timing of an individual injector is dithered in synchronism with the rotation of the crank shaft. While the one injector is being worked upon, the timing of the other injectors is fixed. In accordance with the dithering mode, the timing of the selected injector is advanced during the first half of the dither cycle and retarded by an equal amount in the second half, all as is indicated in Figure 3. Each half of the dither cycle is made to comprise an equal rotation of the cranked shaft. Preferably, at least two engine cycles (four revolutions for a four-stroke cycle engine) are included in each half cycle of the dither period. If the timing of actual fuel flow from the injector is retarded of MBT, engine speed will be seen to increase when the inject time is advanced, and decreased when the inject time is retarded. Similarly, if the inject time is advanced of MBT, the reverse will occur and the speed will vary as is shown in curve 38 of Figure 3. The logic of the control mechanism will advance the timing if the speed variation is as shown in curve 36 and retarded if the variation is as shown in curve 38. Thus, the timing will always be moved toward MBT.

An inspection of the speed curves of Figure 3 shows that timing should be advanced if speed in the central portion of the dither cycle, i.e., from $-2n$ to $+2n$ is higher than the outer edges of the dither cycle, i.e., from $-4n$ to $-2n$ and from $+2n$ to $+4n$. Contrariwise, if the speed in the central portions is lower than in the outer edge portions of the dither cycle, then timing of the injector flow should be retarded. Again, one way of implementing this logic is to determine the error signal in accordance with the error equation (1). A positive value of E indicates that the timing should be advanced, while a negative value indicates that the timing should be retarded. Thus, at the end of each dither cycle, a timing correction is added in addition to the normal dithering of the timing. The correction may be of a constant magnitude, and in the advance direction for positive E or in the retard direction for negative E. It is also possible to make the degree of correction proportional to the magnitude of the error signal, E.

For this system to work properly, the dither period must be synchronized with the engine's firing pulses. If it is not so synchronized, it is possible for the MBT seeking logic to confuse speed variations associated with engine firing pulses with speed changes due to dithering of the timing of an individual injector. Furthermore, since only a single injector is being dithered at any one time during the calibration phase, each quarter of the dither cycle should contain at least one complete engine cycle so that the injector is certain to have been fired at least once in every quarter.

As with the overall system for optimizing the timing of the entire engine already described, individual injector calibration may be attained using either a discrete digital electronic implementation or a properly programmed microprocessor system. In either event, the dither cycle is initiated by a pulse indicating the passage of a reference mark on the flywheel past a stationary sensor. A timer is initiated with the detection of the mark and is made to run for two revolutions until the mark on the flywheel passes the sensor for the second time. The average time for this first quarter is then used to calculate $\Delta t_1$ of the aforementioned error equation. The time for the second two revolutions is then measured in the same fashion so that the value $\Delta t_2$ can be determined. The passage of the timing mark at the end of the second quarter is also used to signal that the timing should be retarded to initiate the second half of the dither cycle (see Figure 3). Suitable timers are then used in the same manner to measure the time for the other four revolutions occurring during the dither cycle to thus determine the factors $\Delta t_3$ and $\Delta t_4$. These four rotation time components are then used to calculate E and to determine if an advance or retard timing correction should be added at the end of the dither cycle. This process is continued until MBT timing is approached. A suitable test is incorporated into either the discrete logic or into the software controlling the microprocessor for indicating when the system has converged upon the MBT point. This timing is then averaged over several cycles and recorded and gives a measure of the MBT timing of a given injector. The same process is performed for each engine injector seritum.

Once each of the injectors has been subjected to the control algorithm of the present invention, the individual injector MBT timing values are converted into relative timing of the injectors. This then reflects their relative electrical and mechanical delay characteristics. Knowing the individual values permits initialization or calibration of the timing control system associated with the injectors to the individual characteristics of the injectors themselves.

The foregoing procedure may be employed whenever the system must be recalibrated and may be initiated either manually or automatically. Once calibrated, however, the system is switched back to normal timing control already described. Of this point, cylinder-to-cylinder timing differences have been substantially eliminated because of the preliminary calibration procedure on the individual injectors, one at a time.

In the same fashion that it is possible to introduce bias so as to cause overall operation away from MBT by predetermined amounts as was previously explained, it can also be employed during the calibration phase where the injectors of a diesel engine are operated upon individually to determine their respective variations. In that the speed vs. timing curve is somewhat steeper as timing moves away from MBT, the use of biasing to obtain a larger value of E and thus make the system more sensitive may be expedient.

**Claims**

1. A method for calibrating the fuel injection timing control of an internal combustion engine, by:

(a) sensing (16, 18, 20) integral rotations of the output shaft of said engine; the method comprises

(b) dithering by cyclically advancing (24, 22) the start-of-inject time of at least one of said injectors from a given setting of said timing control for a first predetermined period of time in synchronism with the angular rotation of said output shaft and returning the start-of-inject time of at least one of the injectors to a given setting for a predetermined second period of time in synchronism with the angular rotation of such output shaft;

(c) determining the average speed of rotation of said output shaft by measuring

(i) the first speed of the shaft at or near the beginning of a first time period synchronous with the dithering and a second speed of the shaft at or near the end of a second time period later than the first time period synchronous with the dithering and located in the same dithering period as the first time period and averaging the first and second speeds to produce a first average speed;

(ii) a third speed of the shaft at a predetermined time within the second half of the first time period and a fourth speed of the shaft at a predetermined time within the first half of the second time period and averaging the third and fourth speeds to produce a second average speed;

(d) computing the difference between the first and second average speeds; characterised in that:

(e) the computing means (26, 80) determines in accordance with shaft speed a cycle index (n), which cycle index determines the number of shaft rotations in a timing period $\Delta t_1$, $\Delta t_2$, $\Delta t_3$, $\Delta t_4$;

(f) changes the cycle index (n), to increase the number of shaft rotations in a timing period $\Delta t_1$, $\Delta t_2$, $\Delta t_3$, $\Delta t_4$ when the engine speed falls below a predetermined value;

(g) is operative when the cycle index is changed to add weighted difference factors $(A\Delta t_{-4}, B\Delta t_{-1})$, from a first cycle within the increased cycle index, to the differences in a second cycle within the increased cycle index to produce a modified difference between the first and second average speeds; and

(h) adjusts said given setting in accordance with the modified difference in said first and second average speeds.

2. A method of phasing the commencement timing of the fuel injectors for a multi-cylinder engine as claimed in Claim 1, including the steps of:

(a) sensing integral revolutions of the output shaft of said engine characterised in that the method comprises;

(b) reciprocally varying the start-of-inject time of one of a plurality of fuel injectors cyclically from a given first setting to a second setting for a plurality of first predetermined periods of time synchronous with the angular rotation of the output shaft and for returning the start-of-inject time back to the given first setting for a plurality of interposed second predetermined periods of time synchronous with the angular rotation of the output shaft;

(c) determining the average speed of rotation of the output shaft by measuring

(i) a first speed of the shaft at or near the beginning of a first time period and a second speed of the shaft at or near the end of a second time period and averaging the first and second speeds to produce a first average speed;

(ii) a third speed of the shaft at a predetermined time within the second half of a first time period and a fourth speed of the shaft at a predetermined time within the first half of a second time period and averaging the third and fourth speeds to produce a second average speed;

(d) computing means for determining the weighted difference between the first and second average speeds; and

(e) adjusting said given time setting in accordance with the computed weighted difference;

(f) recording the start-of-inject time value corresponding to a predetermined value relative to that for maximum brake torque; and

(g) repeating steps (a) through (f) for each engine fuel injector.

3. The method for phasing the timing of fuel injectors as in Claim 2 characterised in that it further includes the steps of:

(a) determining the deviations in timing value of all other injectors from that of a predetermined one of said injectors;

(b) converting said deviations to time measurements; and

(c) applying said time measurements to an engine performance modifying control system.

4. An adaptive electronic control system for maximising the performance of a power producing machine for given settings of a machine performance modifying parameter, comprising:

(a) shaft rotation sensing means (16, 18, 20) coupled to said machine for sensing complete revolutions of the output shaft of said machine;

(b) dithering means coupled (24, 22) to said shaft rotation means for reciprocally moving the setting of said machine performance parameter from a given first setting to a second setting for a plurality of first predetermined periods of time synchronous with the angular rotation of the output shaft and for returning the parameter back to the given first setting for a plurality of interposed second predetermined periods of time synchronous with the angular rotation of the output shaft;

(c) speed determining means coupled to said shaft rotation sensing means for measuring

(i) a first speed of the shaft at or near the beginning of a first time period synchronous with the dithering and a second speed of the shaft at or near the end of a second time period later than the first time period synchronous with the dithering and located in the same dithering period as the first time period and means for averaging the first and second speeds to produce a first average speed;

(ii) a third speed of the shaft at a predetermined time within the second half of the first time period and a fourth speed of the shaft at a predetermined time within the first half of the second time period and means for averaging the third and fourth speeds to produce a second average speed;

(d) computing means for determining the difference between the first and second average speeds; characterised in that:

(e) the computing means (26, 80) includes means for determining in accordance with shaft speed a cycle index (n), which cycle index determines the number of shaft rotations in a timing period $\Delta t_1$, $\Delta t_2$, $\Delta t_3$, $\Delta t_4$;

(f) means for changing the cycle index (n), to increase the number of shaft rotations in a timing period $\Delta t_1$, $\Delta t_2$, $\Delta t_3$, $\Delta t_4$ when the engine speed falls below a predetermined value;

(g) means operative when the cycle index is changed to add weighted difference factors ($A\Delta t_{-4}$, $B\Delta t_{-1}$) from a first cycle within the increased cycle index, to the difference in a second cycle within the increased cycle index to produce a modified difference (30) between the first and second average speeds; and

(h) means (32) for adjusting said given setting in accordance with the modified difference in said first and second average speeds.

5. An adaptive electronic control system as claimed in Claim 4 wherein said first, second, third and fourth speed measurements are taken within consecutive first and second time periods.

6. An adaptive electronic control system as claimed in Claim 4 in which the first and fourth speed measurements are taken from first and second time periods which are not consecutive with the first and second time periods within which the second and third speed measurements are taken.

7. An adaptive electronic control system as in any one of Claims 4 to 6 in which the power producing machine is a reciprocating engine powered by petrol, diesel or other hydrocarbon fuel characterised in that each phase of said period of reciprocal movement of said setting includes an equal number of machine cylinder firing pulses and is in synchronism with said cylinder firing pulses.

8. An adaptive electronic control system as in any one of Claims 4 to 7 characterised in that said shaft rotation sensing means comprises means (16, 18) for producing one electrical pulse for each 360° rotation of said shaft.

9. An adaptive control system as in Claim 8 characterised in that said means for producing an electrical pulse includes:

(a) means (16) secured to said shaft and rotatable therewith;

(b) a mark element (18) disposed on said means secured to said shaft and rotatable therewith; and

(c) a mark sensing means (20) fixedly mounting proximate the periphery of said means secured to said shaft.

10. An adaptive control system as claimed in any one of Claims 4 to 9 characterised in that said computing means includes biasing means for modifying said weighted difference whereby said machine setting is held in a predetermined relationship with respect to the MBT setting.

11. An adaptive control system as in Claim 10 characterised in that said biasing means comprises:

(a) memory means (84) operative coupled to said computing means and adapted to store predetermined operands at addressable locations therein;

(b) addressing means associated with said speed determining means for selective reading said operands from said memory means;

(c) means including said computing means for forming the product of said operand and a factor proportional to the square

$$(\Delta t_1 + \Delta t_2 + \Delta t_3 + \Delta t_4)^2$$

of the engine's cycle time; and

(d) means for adding said product to said weighted difference between the average speeds in first ones of said plural segments and in second ones of said plural segments.

12. An adaptive control system as claimed in any one of Claims 4 to 11 characterised in that said means for adjusting said given setting comprise signal responsive means (32) coupled to said computing means.

13. An adaptive control system as claimed in any one of Claims 4 to 12 characterised in that said speed determining means comprises:

(a) a source of regularly occurring clock pulses;

(b) counting means; and

(c) means coupling said source of regularly occurring clock pulses to said counting means whereby those clock pulses occurring during predetermined rotations of said output shaft are accumulated in said counting means.

14. An adaptive control system as in Claim 13 characterised in that it further includes cycle index means responsive to the rotational speed of said shaft for increasing the number of said predetermined rotations of said output shaft during which said clock pulses are accumulated in said counting means.

15. An adaptive control system as in Claim 13 or 14 characterised in that said computing means includes:

(a) digital adding means coupled to said counting means for periodically forming sum values of the pulses accumulated in said counting means; and

(b) digital subtracting means coupled to receive the output from said digital adding means for periodically generating a digital value representative of the algebraic difference between the said sum values.

16. An adaptive control system as in Claim 12 characterised in that said counting means, said digital adding means and said digital subtracting means are controlled by said shaft rotation sensing means.

17. An adaptive electronic control system as

EP 0 235 418 B1

claimed in any one of Claims 4 to 16 characterised in that said machine performance modifying parameter comprises the start-of-inject time of at least one of a plurality of engine fuel injectors.

**Patentansprüche**

1. Verfahren zum Kalibrieren der zeitlichen Steuerung der Kraftstoffeinspritzung einer Brennkraftmaschine durch:

(a) Aufnehmen (16, 18, 20) der Umdrehungen der Ausgangswelle dieser Maschine; das Verfahren umfaßt

(b) Verändern durch zyklisches Verstellen (24, 22) des Beginns der Einspritzzeit mindestens eines der Einspritzventile in Abhängigkeit von einem gegebenen Setzen einer Zeitsteuerung für eine erste festgelegte Zeitdauer synchron mit der Winkelumdrehung der Ausgangswelle und Rückstellen des Beginns der Einspritzzeit mindestens eines der Einspritzventile auf ein gegebenes Setzen für eine zweite festgelegte Zeitdauer synchron mit der Winkelumdrehung der Ausgangswelle;

(c) Festlegen der mittleren Umdrehungsgeschwindigkeit der Ausgangswelle durch Messen (i) der ersten Geschwindigkeit der Welle zu oder nahe bei dem Beginn einer ersten Zeitdauer synchron mit dem Verändern und einer zweiten Geschwindigkeit der Welle zu oder nahe bei dem Ende einer zweiten Zeitdauer später als die erste Zeitdauer synchron mit dem Verändern und angeordnet in der gleichen Veränderungsperiode wie die erste Zeitdauer und Mittelung der ersten und der zweiten Geschwindigkeiten um eine erste Mittelgeschwindigkeit zu erhalten; (ii) einer dritten Geschwindigkeit der Welle zu einer festgelegten Zeit in der zweiten Hälfte der ersten Zeitdauer und einer vierten Geschwindigkeit der Welle zu einer festgelegten Zeit in der ersten Hälfte der zweiten Zeitdauer und Mittelung der dritten und vierten Geschwindigkeiten um eine zweiten Mittelgeschwindigkeit zu erhalten;

(d) Differenzbildung zwischen der ersten und der zweiten Mittelgeschwindigkeit; dadurch gekennzeichnet, daß

(e) der Rechner (26, 80) abgestimmt auf die Welle einen Zyklus-Index (n) festlegt, der die Zahl der Wellenumdrehungen in einer Zeitperiode $\Delta t_1$, $\Delta t_2$, $\Delta t_3$, $\Delta t_4$ bestimmt;

(f) es den Zyklus-Index (n) ändert, um die Zahl der Wellendrehungen in einer Zeitperioden $\Delta t_1$, $\Delta t_2$, $\Delta t_3$, $\Delta t_4$ zu erhöhen, wenn die Geschwindigkeit der Maschine unter einen bestimmten Wert fällt;

(g) er wirksam ist, wenn der Zyklus-Index geändert wird, um gewichtete Differenzfaktoren ($A\Delta t_{-4}$, $B\Delta t_{-1}$) hinzuzufügen, von einem ersten Zyklus in dem erhöhten Zyklus-Index, zu den Differenzen in einem zweiten Zyklus in dem erhöhten Zyklus-Index, um eine modifizierte Differenz zwischen den ersten und den zweiten Mittelgeschwindigkeiten zu schaffen und;

(h) er einstellt das gegebene Setzen abhängig von der modifizierten Differenz in den ersten und zweiten Mittelgeschwindigkeiten.

2. Verfahren zum Verschieben der Anfangszeit von Kraftstoff-Einspritzventilen eines mehrzylindrischen Motors nach Anspruch 1, mit folgenden Schritten:

(a) Aufnehmen der Umdrehungen der Ausgangswelle dieses Motors,

dadurch gekennzeichnet, daß das Verfahren folgende Merkmale aufweist;

(b) gegenseitiges Variieren des Beginns der Einspritzzeit einer von mehreren Einspritzventilen in zyklischer Weise von einem gegebenen ersten Setzen bis zum einem zweiten Setzen während einer Mehrzahl von ersten bestimmten Zeitperioden synchron mit der Winkelumdrehung der Ausgangswelle und Rückstellen des Beginns der Einspritzzeit auf ein gegebenes erstes Setzen für eine Mehrzahl von dazwischengeschobenen zweiten vorgegebenen Zeitperioden synchron mit der Winkelumdrehung der Ausgangswelle;

(c) Festlegen der mittleren Umdrehungsgeschwindigkeit der Ausgangswelle durch Messen (i) einer ersten Geschwindigkeit der Welle zu oder nahe bei dem Beginn einer ersten Zeitdauer und einer zweiten Geschwindigkeit der Welle zu oder nahe bei dem Ende einer zweiten Zeitdauer und Mitteln der ersten und zweiten Geschwindigkeiten, um eine erste Mittelgeschwindigkeit zu erhalten; (ii) einer dritten Geschwindigkeit der Welle zu einer festgelegten Zeit in der zweiten Hälfte der ersten Zeitdauer und einer vierten Geschwindigkeit der Welle zu einer festgelegten Zeit in der ersten Hälfte der zweiten Zeitdauer und Mittelung der dritten und vierten Geschwindigkeiten um eine zweite Mittelgeschwindigkeit zu erhalten;

(d) einen Rechner zum Festlegen der gewichteten Differenz zwischen den ersten und zweiten Mittelgeschwindigkeiten; und

(e) Einstellen des gegebenen Setzens der Zeit abhängig von der errechneten gewichteten Differenz;

(f) Aufzeichnen des Wertes des Beginns der Einspritzzeit entsprechend einem festgelegten Wert relativ dazu für ein maximales Bremsmoment; und

(g) Wiederholen der Schritte (a) bis (f) für jedes Einspritzventil des Motors.

3. Verfahren zum Verschieben der Zeit von Kraftstoff-Einspritzventilen nach Anspruch 2, dadurch gekennzeichnet, daß es zusätzlich die folgenden Schritte aufweist:

(a) Ermitteln der Abweichungen der Zeitwerte aller anderen Einspritzventile von einem festgelegten Einspritzventil;

(b) Umwandeln der Abweichungen in Zeitmessungen; und

(c) Anwenden dieser Zeitmessungen auf ein Steuersystem zum Modifizeren der Arbeitsweise eines Motors.

4. Adaptives elektronisches Steuersystem zum Optimieren der Arbeitsweise einer Kraftmaschine für gegebenen Einstellungen eines modifizierten Parameters der Arbeitsweise einer Maschine mit:

(a) Aufnehmern (16, 18, 20) für die Umdrehung der Welle, die mit dieser Maschine verbunden sind, zum Erfassen kompletter Umdrehungen der Ausgangswelle dieser Maschine;

13

(b) Veränderung (22, 24), die mit den Drehmitteln dieser Welle verbunden sind, zum gegenseitigen Verschieben des Setzens des Parameters der Arbeitsweise der Maschine von einem gegebenen ersten Setzen zu einem zweiten Setzen während einer Mehrzahl von ersten festgelegten Zeitperioden synchron mit der Winkelumdrehung der Ausgangswelle und zum Rückstellen des Parameters auf ein gegebenes erstes Setzen während einer Mehrzahl von dazwischengeschobenen zweiten festgelegten Zeitperioden synchron mit der Winkelumdrehung der Ausgangswelle;

(c) Fühlern zum Erfassen der Geschwindigkeit, die mit den Aufnehmern der Umdrehung der Welle verbunden sind, zum Messen (i) einer ersten Geschwindigkeit der Welle zu oder nahe bei dem Beginn einer ersten Zeitperiode synchron mit dem Verschieben und einer zweiten Geschwindigkeit der Welle zu oder nahe bei dem Ende einer zweiten Zeitperiode später als die erste Zeitperiode synchron mit dem Verändern und angeordnet in der gleichen Veränderungsperiode wie die erste Zeitperiode und Mitteln für die Mittelung der ersten und der zweiten Geschwindigkeiten um eine erste Mittelgeschwindigkeit zu erhalten; (ii) einer dritten Geschwindigkeit der Welle zu einer festgelegten Zeit in der zweiten Hälfte der ersten Zeitdauer und einer vierten Geschwindigkeit der Welle zu einer festgelegten Zeit in der ersten Hälfte der zweiten Zeitdauer und Mitteln für die Mittelung der dritten und der vierten Geschwindigkeiten um eine zweite Mittelgeschwindigkeit zu erhalten;

(d) einem Rechner zum Bestimmen der Differenz zwischen den ersten und den zweiten Mittelgeschwindigkeiten; gekennzeichnet durch folgende Merkmale;

(e) der Rechner (26, 80) weist Einrichtungen zum Festlegen eines Zyklus-Indexes (n) abgestimmt auf die Geschwindigkeit der Welle auf, der die Zahl der Wellenumdrehungen in einer Zeitperiode $\Delta t_1$, $\Delta t_2$, $\Delta t_3$, $\Delta t_4$ bestimmt;

(f) Einrichtungen zum Ändern des Zyklus-Indexes (n), um die Zahl der Wellenumdrehungen in einer Zeitperiode $\Delta t_1$, $\Delta t_2$, $\Delta t_3$, $\Delta t_4$ zu erhöhen, wenn die Geschwindigkeit der Maschine unter einen bestimmten Wert fällt;

(g) wirksame Einrichtungen, wenn der Zyklus-Index geändert wird, um gewichtete Differenzfaktoren ($A\Delta t_{-4}$, $B\Delta t_{-1}$) hinzuzufügen, von einem ersten Zyklus in dem erhöhten Zyklus-Index, zu den Differenzen in einem zweiten Zyklus in dem erhöhten Zyklus-Index, um eine modifizierte Differenz zwischen den ersten und zweiten Mittelgeschwindigkeiten zu schaffen; und

(h) einer Vorrichtung (32) zum Einstellen des gegebenen Setzens abhängig von der modifizierten Differenz in den ersten und zweiten Mittelgeschwindigkeiten.

5. Adaptives elektronisches Steuersystem nach Anspruch 4, dadurch gekennzeichnet, daß die ersten, zweiten, dritten und vierten Geschwindigkeitsmessungen innerhalb aufeinanderfolgender erster und zweiter Zeitperioden durchgeführt werden.

6. Adaptives elektronisches Steuersystem nach Anspruch 4, dadurch gekennzeichnet, daß die ersten und vierten Geschwindigkeitsmessungen innerhalb solcher erster und zweiter Zeitperioden durchgeführt werden, die nicht auf erste und zweite Zeitperioden folgen, innerhalb derer die zweiten und dritten Geschwindigkeitsmessungen durchgeführt werden.

7. Adaptives elektronisches Steuersystem nach Anspruch 4 bis 6, wobei die Kraftmaschine eine hin- und hergehende Maschine ist, die mit Benzin, Rohöl oder einem anderen Kohlenwasserstoff-Brennstoff betrieben wird, dadurch gekennzeichnet, daß jede Phase der Periode der hin- und hergehenden Bewegung des Setzens eine gleiche Anzahl von Zylinder-Zündungen aufweist und sich in Synchronismus mit diesen Zylinder-Zündungen befindet.

8. Adaptives elektronisches Steuersystem nach einem der Ansprüche 4 bis 7, dadurch gekennzeichnet, daß die Aufnehmer für die Umdrehung der Welle Einrichtungen (16, 18) zur Abgabe eines elektrischen Impulses für jede 360°-Umdrehung der Welle aufweisen.

9. Adaptives Steuersystem nach Anspruch 8, dadurch gekennzeichnet, daß die Einrichtungen zur Abgabe eines elektrischen Impulses folgende Merkmale aufweisen:

(a) Einrichtungen (16), die mit der Welle verbunden sind und mit dieser rotieren;

(b) ein Markierungselement (18) auf den Einrichtungen, welches mit der Welle verbunden ist und damit rotiert; und

(c) einen Aufnehmer (20) zum Erfassen des Markierungselements ortsfest benachbart am Umfang der Einrichtungen, die mit der Welle verbunden sind.

10. Adaptives Steuersystem nach einem der Ansprüche 4 bis 9, dadurch gekennzeichnet, daß der Rechner Vorspannmittel zum Modifizieren der gewichteten Differenz aufweist, wodurch das Setzen der Maschine in einer festgelegten Beziehung zu dem MBT-Setzen gehalten wird.

11. Adaptives Steuersystem nach Anspruch 10, dadurch gekennzeichnet, daß die Vorspannmittel folgende Merkmale aufweisen;

(a) Speicher (84), die wirksam mit dem Rechner verbunden und zum Abspeichern festgelegter Operanden und adressierbarer Angaben ausgebildet sind;

(b) Adressen, mit mit den Einrichtungen zum Ermitteln der Geschwindigkeit verbunden sind, um die Operanden selektiv aus dem Speicher auszulesen;

(c) Mitteln, einschließlich des Rechners, um das Produkt des Operanden und einem Faktor proportional zu dem Quadrat

$$(\Delta t_1 + \Delta t_2 + \Delta t_3 + \Delta_4)^2$$

der Zyklus-Zeit der Maschine zu bilden; und

(d) Einrichtungen zum Addieren des Produkts zu der gewichteten Differenz zwischen den Mittelgeschwindigkeiten in ersten der vielen Segmente und in zweiten der vielen Segmente.

12. Adaptives Steuersystem nach einem der Ansprüche 4 bis 11, dadurch gekennzeichnet, daß die Vorrichtung zum Einstellen des gegebenen Setzens signalabhängige Mittel (32) aufweist, die mit dem Rechner in Verbindung stehen.

13. Adaptives Steuersystem nach einem der Ansprüche 4 bis 12, dadurch gekennzeichnet, daß die Fühler zum Erfassen der Geschwindigkeit aufweisen;

(a) eine Quelle regelmäßig erzeugter Zeitpulse;

(b) eine Zähleinrichtung; und

(c) Mittel zum Verbinden der Quelle der regelmäßig erzeugten Zeitpulse mit der Zähleinrichtung, wodurch diese Zeitpulse während festgelegter Umdrehungen der Ausgangswelle in der Zähleinrichtung auflaufen.

14. Adaptives Steuersystem nach Anspruch 13, dadurch gekennzeichnet, daß es weiterhin Zyklus-Indexe aufweist, die abhängig von der Rotationsgeschwindigkeit der Welle sind, um die Anzahl der festgelegten Umdrehungen der Ausgangswelle zu erhöhen, währenddessen die Zeitpulse in der Zähleinrichtung auflaufen.

15. Adaptives Steuersystem nach Anspruch 13 oder 14, dadurch gekennzeichnet, daß der Rechner aufweist:

(a) eine digitale Additionseinrichtung, die mit der Zähleinrichtung verbunden ist, um periodisch Summenwerte der auflaufenden Pulse in der Zähleinrichtung zu bilden; und

(b) eine digitale Subtraktionseinrichtung, die zur Aufnahme der abgegebenen Werte von der digitalen Additionseinrichtung Verbindung hat, um periodisch einen digitalen Wert entsprechend der algebraischen Differenz zwischen den Summenwerten zu bilden.

16. Adaptives Steuersystem nach Anspruch 12, dadurch gekennzeichnet, daß die Zähleinrichtung, die digitale Additionseinrichtung und die digitale Subtraktionseinrichtung von dem Fühler zum Erfassen der Rotation der Welle gesteuert werden.

17. Adaptives Steuersystem nach einem der Ansprüche 4 bis 16, dadurch gekennzeichnet, daß der modifizierte Parameter der Arbeitsweise der Maschine den Beginn der Einspritzzeit von mindestens einem der mehreren Einspritzventile aufweist.

**Revendications**

1. Méthode pour régler la commande de temporisation de l'injection de carburant d'un moteur à combustion interne, en:

(a) captant (16, 18, 20) les rotations intégrales de l'arbre de sortie du moteur; la méthode consistant à

(b) produire une vacillation en avançant cycliquement (24, 22) le temps de début d'injection d'au moins un des injecteurs à partir d'un réglage donné de la commande de temporisation pendant une première période de temps prédéterminée en synchronisme avec la rotation angulaire de l'arbre de sortie et en remettant le temps de début d'injection d'au moins un des injecteurs à un réglage donné pendant une deuxième période de temps prédéterminée en synchronisme avec la rotation angulaire de l'arbre de sortie;

(c) déterminer la vitesse moyenne de rotation de l'arbre de sortie en mesurant:

(i) la première vitesse de l'arbre au ou près du début d'une première période de temps synchrone avec la vacillation et une deuxième vitesse de l'arbre à ou près de la fin d'une deuxième période de temps suivant la première période de temps synchrone avec la vacillation et située dans la même période de vacillation que la première période de temps, la moyenne des première et deuxième vitesses étant calculée pour produire une première vitesse moyenne;

(ii) une troisième vitesse de l'arbre à un temps prédéterminé dans la deuxième moitié de la première période de temps et une quatrième vitesse de l'arbre à un temps prédéterminé dans la première moitié de le deuxième période de temps, la moyenne des troisième et quatrième vitesses étant calculée pour produire une deuxième vitesse moyenne;

(d) calculer la différence entre la première et la deuxième vitesse moyenne; caractérisée en ce que le moyen de calcul (26, 80)

(e) détermine, selon la vitesse d'arbre, un indice cyclique (n), cet indice cyclique déterminant le nombre de rotations d'arbre pendant une période de temporisation $\Delta t_1$, $\Delta t_2$, $\Delta t_3$, $\Delta t_4$;

(f) change l'indice cyclique (n), pour augmenter le nombre de rotations d'arbre pendant une période de temporisation $\Delta t1$, $\Delta t_2$, $\Delta t_3$, $\Delta t_4$ où la vitesse de moteur chute au-dessous d'une valeur prédéterminée;

(g) est actif quand l'indice cyclique est changé pour ajouter des facteurs différentiels pondérés ($A\Delta t_{-4}$, $B\Delta t_{-1}$), à partir d'un premier cycle dans l'indice cyclique augmenté, aux différences pendant un deuxième cycle dans l'indice cyclique augmenté, pour produire une différence modifiée entre la première et la deuxième vitesse moyenne; et

(h) ajuste le réglage donné selon la différence modifiée entre la première et la deuxième vitesse moyenne.

2. Méthode de mise en phase du début de temporisation des injecteurs de carburant pour un moteur à plusieurs cylindres selon la revendication 1, incluant l'opération consistant à:

(a) capter les révolutions intégrales de l'arbre de sortie du moteur,

la méthode étant caractérisée en ce qu'elle consiste à:

(b) faire varier d'une façon inverse le temps de début d'injection d'un injecteur d'un ensemble d'injecteurs de carburant cycliquement à partir d'un premier réglage donné jusqu'à un deuxième réglage pendant un ensemble de premières périodes de temps prédéterminées synchrones avec la rotation angulaire de l'arbre de sortie et remettre le temps de début d'injection au premier réglage donné pendant un ensemble de deuxièmes périodes de temps prédéterminées interposées, synchrones avec la rotation angulaire de l'arbre de sortie;

(c) déterminer la vitesse moyenne de rotation de l'arbre de sortie en mesurant:

(i) une première vitesse de l'arbre au ou près du début d'une première période de temps et une deuxième vitesse de l'arbre à ou près de la fin d'une deuxième période de temps, la moyenne des première et deuxième vitesses étant calculée pour produire une première vitesse moyenne;

(ii) une troisième vitesse de l'arbre à un temps prédéterminé dans la deuxième moitié d'une première période de temps et une quatrième vitesse de l'arbre à un temps prédéterminé dans la première moitié d'une deuxième période de temps, la moyenne des troisième et quatrième vitesses étant calculée pour produire une deuxième vitesse moyenne;

(d) déterminer par un moyen de calcul la différence pondérée entre la première et la deuxième vitesse moyenne; et

(e) ajuster le réglage de temps donné selon la différence pondérée calculée;

(f) enregistrer la valeur de temps de début d'injection correspondant à une valeur prédéterminée relative à celui pour un couple de freinage maximal; et à

(g) répéter les opérations (a) à (f) pour chaque injecteur de carburant de moteur.

3. Méthode de mise en phase de la temporisation des injecteurs de carburant selon la revendication 2, caractérisée en ce qu'elle comprend en outre les opérations consistant à:

(a) déterminer les déviations de valeur de temporisation de tous les autres injecteurs par rapport à celle d'un injecteur prédéterminé parmi les injecteurs;

(b) convertir les déviations en mesures de temps; et à

(c) appliquer les mesures de temps à un système de commande de modification des performances du moteur.

4. Système de commande électronique adaptatif pour augmenter au maximum les performances d'une machine motrice pour des réglages donnés d'un paramètre de modification des performances de machine, comprenant:

(a) un moyen capteur de rotation d'arbre (16, 18, 20) couplé à la machine pour capter des révolutions complètes de l'arbre de sortie de la machine;

(b) un moyen de vacillation (24, 22) couplé au moyen capteur de rotation d'arbre pour changer d'une façon inverse le réglage du paramètre de performances de machine d'un premier réglage donné à un deuxième réglage pendant un ensemble de premières périodes de temps prédéterminées synchrones avec la rotation angulaire de l'arbre de sortie et pour remettre le paramètre au premier réglage donné pendant un ensemble de deuxième périodes de temps prédéterminées interposées, synchrones avec la rotation angulaire de l'arbre de sortie;

(c) un moyen de détermination de vitesse couplé au moyen capteur de rotation d'arbre pour mesurer

(i) une première vitesse de l'arbre au ou près du début d'une première période de temps synchrone avec la vacillation et une deuxième vitesse de l'arbre à ou près de la fin d'une deuxième période de temps suivant la première période de temps synchrone avec la vacillation et située dans la même période de vacillation que la première période de temps, un moyen calculant la moyenne des première et deuxième vitesses afin de produire une première vitesse moyenne;

(ii) une troisième vitesse de l'arbre à un temps prédéterminé dans la deuxième moitié de la première période de temps et une quatrième vitesse de l'arbre à un temps prédéterminé dans la première moitié de la deuxième période de temps, un moyen calculant la moyenne des troisième et quatrième vitesses afin de produire une deuxième vitesse moyenne;

(d) un moyen de calcul pour déterminer la différence entre la première et la deuxième vitesse moyenne; caractérisé en ce que:

(e) le moyen de calcul (26, 80) comprend un moyen pour déterminer, selon la vitesse d'arbre, un indice cyclique (n), cet indice cyclique déterminant le nombre de rotations d'arbre pendant une période de temporisation $\Delta t_1$, $\Delta t_2$, $\Delta t_3$, $\Delta t_4$;

(f) un moyen pour changer l'indice cyclique (n), afin d'augmenter le nombre de rotations d'arbre pendant une période de temporisation $\Delta t_1$, $\Delta t_2$, $\Delta t_3$, $\Delta t_4$ où la vitesse de moteur chute au-dessous d'une valeur prédéterminée;

(g) un moyen actif quand l'indice cyclique est changé pour ajouter des facteurs différentiels pondérés ($A\Delta t_{-4}$, $B\Delta t_{-1}$) à partir d'un premier cycle dans l'indice cyclique augmenté, à la différence pendant un deuxième cycle dans l'indice cyclique augmenté pour produire une différence modifiée (30) entre la première et la deuxième vitesse moyenne; et

(h) un moyen (32) pour ajuster le réglage donné selon la différence modifiée entre la première et la deuxième vitesse moyenne.

5. Système de commande électronique adaptatif selon la revendication 4, dans lequel les première, deuxième, troisième et quatrième mesures de vitesse sont prises pendant des première et deuxième périodes de temps consécutives.

6. Système de commande électronique adaptatif selon la revendication 4, dans lequel les première et quatrième mesures de vitesse sont prises à partir des première et deuxième périodes de temps qui ne sont pas consécutives avec les première et deuxième périodes de temps pendant lesquelles les deuxième et troisième mesures de vitesse sont prises.

7. Système de commande électronique adaptatif selon l'une quelconque des revendications 4 à 6, dans lequel la machine motrice est une machine alterntive alimentée avec de l'es ,nce, en diesel ou avec un autre combustible à l'hydrocarbure, caractérisé en ce que chaque phase de la période de mouvement alternatif du réglage comprend un nombre égal d'impulsions d'allumage de cylindre de machine et en ce qu'elle est en synchronisme avec les impulsions d'allumage de cylindre.

8. Système de commande électronique adaptatif selon l'une quelconque des revendications 4 à 7, caractérisé en ce que le moyen capteur de rotation d'arbre comprend un moyen (16, 18) pour produire une impulsion électrique pour chaque rotation de 360° de l'arbre.

9. Système de commande adaptatif selon la revendication 8, caractérisé en ce que le moyen pour produire une impulsion électrique comprend:

(a) un moyen (16) fixé à l'arbre et pouvant tourner avec celui-ci;

(b) un élément de repère (18) disposé sur le moyen fixé à l'arbre et pouvant tourner avec celui-ci; et

(c) un moyen capteur de repère (20) monté de façon fixe au voisinage de la périphérie du moyen fixé à l'arbre.

10. Système de commande adaptatif selon l'une quelconque des revendications 4 à 9, caractérisé en ce que le moyen de calcul comprend un moyen de déviation pour modifier la différence pondérée, le réglage de machine étant ainsi maintenu dans un rapport prédéterminé avec le réglage de couple de freinage maximal (MBT).

11. Système de commande adaptatif selon la revendication 10, caractérisé en ce que le moyen de déviation comprend:

(a) un moyen à mémoire (84) couplé activement au moyen de calcul et agencé pour mémoriser des opérandes prédéterminés à des emplacements adressables dans celui-ci;

(b) un moyen d'adressage associé au moyen de détermination de vitesse pour lire sélectivement les opérandes dans le moyen à mémoire;

(c) un moyen incluant le moyen de calcul pour former le produit de l'opérande et d'un facteur proportionnel au carré

$$(\Delta t_1 + \Delta t_2 + \Delta t_3 + \Delta t_4)^2$$

du temps de cycle de la machine; et

(d) un moyen pour ajouter le produit à la différence pondérée entre les vitesses moyennes dans des premiers segments de l'ensemble de segments et dans des deuxièmes segments de l'ensemble de segments.

12. Système de commande adaptatif selon l'une quelconque des revendications 4 à 11, caractérisé en ce que le moyen d'adjustage du réglage donné comprend un moyen de réponse à des signaux (32) couplé au moyen de calcul.

13. Système de commande adaptatif selon l'une quelconque des revendications 4 à 12, caractérisé en ce que le moyen de détermination de vitesse comprend:

(a) une source d'impulsions d'horloge se produisant régulièrement;

(b) un moyen de comptage; et

(c) un moyen reliant la source d'impulsions d'horloge se produisant régulièrement au moyen de comptage, les impulsions d'horloge se produisant pendant des rotations prédéterminées de l'arbre de sortie étant ainsi accumulées dans le moyen de comptage.

14. Système de commande adaptatif selon la revendication 13, caractérisé en ce qu'il comprend en outre un moyen générateur d'indice cyclique réagissant à la vitesse de rotation de l'arbre pour augmenter le nombre des rotations prédéterminées de l'arbre de sortie pendant lesquelles les impulsions d'horloge sont accumulées dans le moyen de comptage.

15. Système de commande adaptatif selon l'une quelconque des revendications 13 et 14, caractérisé en ce que le moyen de calcul comprend:

(a) un moyen d'addition numérique couplé au moyen de comptage pour former périodiquement des valeurs de somme des impulsions accumulées dans le moyen de comptage; et

(b) un moyen de soustraction numérique couplé pour recevoir le signal de sortie du moyen d'addition numérique afin de générer périodiquement une valeur numérique représentative de la différence algébrique entre les valeurs de somme.

16. Système de commande adaptatif selon la revendication 12, caractérisé en ce que le moyen de comptage, le moyen d'addition numérique et le moyen de soustraction numérique sont commandés par le moyen capteur de rotation d'arbre.

17. Système de commande adaptatif selon l'une quelconque des revendications 4 à 16, caractérisé en ce que le paramètre de modification des performances de machine est constitué par le temps de début d'injection d'au moins un injecteur d'un ensemble d'injecteurs de carburant de moteur.

Fig. 1

Fig. 2

SIX CYLINDER

300 FT. LB.

RPM

CRANK ANGLE (DEGREES)

SIX CYLINDER — DITHERED

ADVANCE—
RETARD—

SHAFT
SPEED

SHAFT
ROTATION

MEASURING
INTERVAL
CORRESPONDING
TO:

$\Delta t_{-4}$ | $\Delta t_{-3}$ | $\Delta t_{-2}$ | $\Delta t_{-1}$ | $\Delta t_1$ | $\Delta t_2$ | $\Delta t_3$ | $\Delta t_4$

PREVIOUS CYCLE

CURRENT CYCLE

Fig. 3

EP 0 235 418 B1

Fig. 4

Fig. 5

EP 0 235 418 B1

# Fig. 6a

MAIN ROUTINE

## Fig. 6b

INTERRUPT HANDLER

INCREMENT
CYCLE COUNT

CYCLE COUNT=
CYCLE INDEX
? — N → RETURN

Y

READ TIME COUNT
AND REINITIALIZE
TIME COUNTER

INCREMENT
QUARTER COUNT

QUARTER
COUNT = 2
?

N

Y

RETARD
TIMING

A (TO FIG. 6c)

INTERRUPT HANDLER

**Fig. 6c**

(A) (FROM FIG. 6b)

NEW CYCLE INDEX FLAG = 1 ?

Y — QUARTER COUNT = 1 ? — N

ADD TIME COUNT TO ERROR AND STORE TIME COUNT

QUARTER COUNT = 2 ? — N

SUBTRACT TIME COUNT FROM ERROR AND STORE TIME COUNT

QUARTER COUNT = 3 ? — N

SUBTRACT TIME COUNT FROM ERROR AND STORE TIME COUNT

QUARTER COUNT = 4 ? — N

ADD TIME COUNT TO ERROR AND STORE TIME COUNT

N — QUARTER COUNT = 1 ? — N

ADD WEIGHTED TIME COUNT TO ERROR AND STORE TIME COUNT

QUARTER COUNT = 2 ? — N

SUBTRACT TIME COUNT FROM ERROR AND STORE TIME COUNT

QUARTER COUNT = 3 ? — N

SUBTRACT TIME COUNT FROM ERROR AND STORE TIME COUNT

QUARTER COUNT = 4 ? — N

ADD WEIGHTED TIME COUNT TO ERROR AND STORE TIME COUNT

RETURN

**Fig. 7a**
PRIOR ART

**Fig. 7b**
PRIOR ART

Fig. 8a

Fig. 8b

Fig. 8c

Fig. 8d

EP 0 235 418 B1

Fig. 8e

Fig. 8f